# FASCICULE DE BREVET EUROPEEN

(11) **EP 3 743 395 B1**
(45) Date de publication et mention de la délivrance du brevet: **12.04.2023**
(21) Numéro de dépôt: 18796714.6
(22) Date de dépôt: 03.10.2018
(51) Int. Cl.: C03C 23/00

(54) **FEUILLE DE VITROCÉRAMIQUE MONOLITHIQUE PRÉSENTANT UNE SURFACE TEXTUREE**
MONOLITHISCHE GLASKERAMIKPLATTE MIT EINER STRUKTURIERTEN OBERFLÄCHE
MONOLITHIC GLASS CERAMIC SHEET WITH PRESENTING A TEXTURED SURFACE

(30) Priorité: 05.10.2017 FR 1759332
(43) Date de publication de la demande: 02.12.2020
(73) Titulaire: Eurokera S.N.C., 02400 Château-Thierry (FR)
(72) Inventeur: COSTANTINI, Daniele, 75005 Paris (FR); OZANAM, Cécile, 91300 Massy (FR); GUEDON, Thibault, 75010 Paris (FR); LECOMTE, Emmanuel, 02400 Nesles la Montagne (FR)
(74) Mandataire: Saint-Gobain Recherche
(86) Numéro de dépôt international: PCT/FR2018/052429
(87) Numéro de publication internationale: WO 2019/069015

(56) Documents cités:
- WO-A1-99/08867
- US-A- 5 861 196
- US-A1- 2001 008 715
- US-A1- 2016 031 755
- US-A1- 2016 280 594

## Description

La présente invention concerne un procédé de texturation d'une feuille de vitrocéramique par laser ainsi qu'une feuille de vitrocéramique texturée susceptible d'être obtenue par ce procédé.

La texturation de feuilles vitrocéramiques en face inférieure et supérieure est déjà bien connue, notamment via l'utilisation de rouleaux de laminage gravés. Ces techniques de texturation présente l'inconvénient d'être coûteuse et peu flexible.

Il est également possible de graver un motif dans la vitrocéramique par ablation de matière (par voie mécanique ou par laser). Cependant, cette technique permet uniquement de creuser la matière mais pas de générer des surépaisseurs. La demande de brevet US 2016/280594 A1 décrit une feuille de vitrocéramique monolithique comprenant une face avant et une face arrière, la dite face arrière présentant une surface texturée ponctuelle à l'aide d'un laser.

Plus récemment, il a été proposé des procédés de texturation de vitrocéramiques par chauffe locale à l'aide d'un traitement laser. Ce traitement laser induit des changements locaux de volumes permettant de créer localement des déformations en surépaisseur ou en sous-épaisseur. Une force extérieure peut également être appliquée pour accentuer la déformation lors du traitement laser. Cependant, avec ces méthodes, les déformations qui sont de petite taille (correspondant au mieux à un disque d'une quinzaine de millimètres de diamètre) doivent être générés une à une, ce qui nécessite un temps de traitement important pour délimiter de larges zones comme par exemple la zone de chauffe d'une feuille de vitrocéramique destinée à une plaque de cuisson.

La présente invention propose un procédé de texturation à l'aide d'un rayonnement laser permettant d'obvier aux inconvénients des méthodes décrites ci-dessus. Le procédé selon l'invention permet notamment de texturer rapidement de grandes surfaces et de proposer une certaine flexibilité. Plus précisément, la présente invention concerne un procédé de texturation d'une feuille de vitrocéramique monolithique comprenant :
- la fourniture d'une feuille de vitrocéramique monolithique comprenant une face avant lisse et une face arrière présentant une surface texturée comprenant des saillies primaires d'une hauteur de 0,01 à 1 mm positionnées de façon périodique ;
- le positionnement de la feuille de vitrocéramique sur un support, ledit support étant réfléchissant sur au moins une partie de sa surface ; et
- la texturation d'une zone de la face avant de la feuille de vitrocéramique à l'aide d'un rayonnement laser.

De façon inattendue, il a été observé que le procédé de l'invention permet en effet de générer des saillies (ou protubérances) secondaires sur la face avant de la feuille de vitrocéramique. Si ces saillies secondaires ne présentent évidemment pas les mêmes dimensions que les saillies primaires, les saillies secondaires présentent en revanche la même disposition relative entre elles que les saillies primaires les unes par rapport aux autres. Il apparaît donc que le procédé selon l'invention permet de « copier » la texture de la surface arrière sur la surface avant. Encore plus étonnant, les saillies secondaires sont générées seulement en regard de la (des) partie(s) réfléchissante(s) du support. Il est ainsi possible de reporter sur la surface avant de la feuille de vitrocéramique un motif formé sur le support par des parties réfléchissantes.

La feuille de vitrocéramique est monolithique, c'est-à-dire qu'elle est formée d'un seul bloc/d'une seule pièce. Elle présente typiquement une épaisseur de 2 à 15 mm, notamment 3 à 10 mm, par exemple 4, 5, 6, 7 ou 8 mm. Les dimensions (longueur et largeur) de la feuille de vitrocéramique dépendent de l'application à laquelle elle est destinée : elle présente généralement des dimensions de 20 à 120 cm, notamment pour ces applications dans des dispositifs de cuisson, mais peut également présenter des dimensions plus importantes, par exemples supérieures à 200 cm, pour des applications de plan de travail.

La feuille de vitrocéramique présente, avant texturation, une face avant (généralement la face destinée à être visible par l'utilisateur) essentiellement lisse, c'est-à-dire une surface pour laquelle les irrégularités de surface sont telles que le rayonnement incident sur la surface n'est pas significativement dévié par ces irrégularités de surface. La face arrière présente au contraire une surface texturée comprenant des saillies (ou protubérances) primaires ayant une hauteur de 0,01 à 1 mm. La forme des saillies primaires n'est pas particulièrement limitée. Elles peuvent avoir notamment une forme pyramidale, conique, hémisphérique ou semi-elliptique. Les sommets de deux saillies primaires adjacentes sont typiquement distants de 0,5 à 5 mm. Les saillies primaires sont de préférences positionnées de façon périodique, typiquement sous forme d'un réseau, par exemple selon des lignes parallèles entre elles et en quinconce par rapport aux saillies des lignes adjacentes. Une telle feuille de vitrocéramique peut être obtenue de façon connue par laminage en faisant passer une feuille de verre mère (c'est-à-dire avant céramisation) entre deux rouleaux de laminage : un rouleau à surface lisse dans le but d'obtenir une surface avant lisse, et un rouleau gravé en négatif de façon à obtenir une surface arrière texturée dotée d'un réseau de saillies primaires. La face arrière est généralement texturée sur toute sa surface ou au moins sur 90% de la surface.

La feuille de vitrocéramique utilisée est généralement une vitrocéramique d'aluminosilicate de lithium. Elle présente de préférence une composition chimique comprenant les constituants suivants dans les limites définies ci-après exprimées en pourcentages pondéraux :

| | |
|---|---|
| SiO₂ | 52 - 75 % |
| Al₂O₃ | 18 - 27 % |
| Li₂O | 2,5 - 5,5 % |
| K₂O | 0 - 3 % |
| Na₂O | 0 - 3 % |
| ZnO | 0 - 3,5 % |
| MgO | 0 - 3 % |
| CaO | 0 - 2,5 % |
| BaO | 0 - 3,5 % |
| SrO | 0 - 2 % |
| TiO₂ | 1,2 - 5,5 % |
| ZrO₂ | 0 - 3 % |
| P₂O₅ | 0 - 8 % |
| Affinants | 0 - 3 % |
| Colorants | 0 - 1 %. |

Les affinants peuvent être choisis par exemple parmi les oxydes d'arsenic, d'antimoine ou d'étain. Dans un mode de réalisation particulier, la feuille de vitrocéramique est exempte d'oxyde d'antimoine et d'arsenic.

La feuille de vitrocéramique peut comprendre des colorants, notamment choisis parmi l'oxyde de vanadium, l'oxyde de fer, l'oxyde de cobalt, l'oxyde de cérium, l'oxyde de sélénium, l'oxyde de chrome, voire l'oxyde de nickel, l'oxyde de cuivre et l'oxyde de manganèse. La feuille de vitrocéramique est de préférence une vitrocéramique colorée à l'oxyde de vanadium. Elle peut comprendre de 0,01 à 0,5 % en poids d'oxyde de vanadium éventuellement en combinaison avec d'autres colorants tels que l'oxyde de fer, l'oxyde de cobalt ou l'oxyde de manganèse.

La feuille de vitrocéramique est positionnée sur un support avant de subir le traitement laser selon l'invention. De préférence, la feuille de vitrocéramique repose entièrement sur le support, c'est-à-dire qu'une des surfaces de la feuille de vitrocéramique est totalement en contact avec le support. La surface en contact avec le support peut être aussi bien la face avant lisse que la face arrière texturée. Dans un mode de réalisation particulier la feuille de vitrocéramique est positionnée de sorte à présenter la face avant lisse en contact avec le support. Il a en effet été remarqué que les saillies secondaires générées sur la face avant présentent une hauteur plus importante dans ce cas.

Le support est réfléchissant sur au moins une partie de sa surface. De préférence, le support présente une première zone de surface réfléchissante et une deuxième zone de surface non-réfléchissante (c'est-à-dire essentiellement absorbante et/ou transparente à la longueur d'onde du rayonnement laser). Par surface réfléchissante on entend au sens de la présente invention une surface réfléchissant au moins 50 %, de préférence au moins 70 %, voire au moins 80 % ou même au moins 90 %, du rayonnement laser. A contrario, par surface non-réfléchissante on entend au sens de la présente invention une surface réfléchissant moins de 20%, de préférence moins de 10% (c'est-à-dire absorbant, transmettant et/ou diffusant au moins 80 %, de préférence au moins 90 %) du rayonnement laser. La réflexion est ici définie comme la réflexion spéculaire du rayonnement laser par le support, celle-ci étant égale à la valeur de 100% à laquelle sont soustraites la transmission, l'absorption et la réflexion diffuse du rayonnement laser par le support. Inversement, l'expression « absorption et/ou transmission » défini la part du rayonnement laser transmis ou absorbé par le support, celle-ci étant égale à la valeur de 100% à laquelle est soustraite la réflexion totale (spéculaire et diffuse) du rayonnement laser par le support. Dans un mode de réalisation particulier, la surface non-réfléchissante est une surface essentiellement absorbante.

Le support peut présenter plusieurs zones réfléchissantes et/ou plusieurs zones non-réfléchissantes. La surface de la ou des zones réfléchissantes représente généralement au moins 1%, de préférence au moins 5%, voire au moins 10%, de la surface du support. Elle représente généralement au plus 50% de la surface du support. Le support a typiquement une taille au moins égale à la taille de la vitrocéramique à texturer, par exemple des dimensions (longueur et largeur) de 20 à 120 cm.

Dans un mode de réalisation particulier, un masque peut être disposé au-dessus de la feuille de vitrocéramique. Le masque a pour fonction d'empêcher l'irradiation des zones masquée par ledit masque par le rayonnement laser. Les zones masquées ne sont par conséquent pas impactées par le traitement laser subséquent. Dans ce mode de réalisation, le support présente de préférence une surface entièrement réfléchissante.

Le procédé selon l'invention comprend une étape de texturation à l'aide d'un rayonnement laser. Plus particulièrement, la feuille de vitrocéramique est irradiée par le rayonnement laser en regard du support. L'utilisation d'un rayonnement laser permet d'apporter l'énergie nécessaire à la feuille de vitrocéramique pour provoquer sa dilatation locale et l'apparition d'un relief sur les zones de la face avant de la feuille de vitrocéramique en regard de la ou des zones de surface réfléchissante du support. Dans le procédé selon l'invention, le rayonnement laser effectue en effet un double passage au travers de la feuille de vitrocéramique au niveau des zones en regard de la ou des zones de surface réfléchissante du substrat. Il est ainsi possible d'obtenir une chauffe rapide (en général en un temps inférieur ou égal à quelques secondes, voire à 1 seconde) et localisée ainsi qu'un refroidissement rapide de la feuille de vitrocéramique permettant l'apparition et le figeage du relief. Les températures atteintes au niveau de la feuille de vitrocéramique en regard des zones de surface réfléchissante du support sont généralement supérieures à 700°C, par exemple de l'ordre de 750°C, voire 850°C, à 1150°C, voire 1100°C ou 1050°C. Au contraire, il est supposé que les températures atteintes au niveau de la feuille de vitrocéramique en regard des zones de surface non-réfléchissante du support sont moins élevées du fait d'un simple passage du rayonnement laser au travers de la feuille de vitrocéramique. Elles sont en générale inférieures d'au moins 100°C, voire d'au moins 200°C, ou même d'au moins 300°C ou d'au moins 400°C par rapport aux températures atteintes au niveau de la feuille de vitrocéramique en regard des zones de surface réfléchissante. Les zones de la feuille de vitrocéramique en regard des zones de surface non-réfléchissante du support sont donc moins affectées par le traitement de texturation. Par ailleurs, sans vouloir être lié par une quelconque théorie, il semble que les saillies primaires de la face arrière agissent comme des loupes qui concentrent le rayonnement laser et provoquent ainsi une déformation locale supplémentaire, sous la forme de saillies secondaires sur la face avant, en regard des zones de surface réfléchissante du support.

Le rayonnement laser est de préférence issu d'au moins un faisceau laser formant une ligne (appelée « ligne laser » dans la suite du texte) qui irradie simultanément au moins une partie de la largeur de la feuille de vitrocéramique, typiquement au moins 0,1%, de préférence au moins 5%, voire au moins 10%, au moins 20%, au moins 50% ou même de préférence la totalité de la largeur de la feuille de vitrocéramique. Le faisceau laser en ligne peut notamment être obtenu à l'aide de systèmes optiques de focalisation. Afin de pouvoir irradier simultanément toute la largeur de la feuille de vitrocéramique, la ligne laser peut être obtenue en combinant plusieurs lignes laser élémentaires. L'épaisseur des lignes laser élémentaires est de préférence comprise entre 0,01 et 1 mm. Leur longueur est typiquement comprise entre 5 mm et 1 m. Les lignes laser élémentaires sont généralement juxtaposées côte à côte pour former une ligne laser unique de sorte que toute la surface de la feuille de vitrocéramique soit traitée simultanément.

Les sources laser sont typiquement des diodes laser ou des lasers fibrés, notamment des lasers à fibre, à diodes ou encore à disque. Les diodes laser permettent d'atteindre de manière économique de fortes densités de puissance par rapport à la puissance électrique d'alimentation, pour un faible encombrement. L'encombrement des lasers fibrés est encore plus réduit, et la puissance linéique obtenue peut être encore plus élevée, pour un coût toutefois plus important. On entend par lasers fibrés des lasers dans lesquels le lieu de génération du rayonnement laser est déporté spatialement par rapport à son lieu de délivrance, le rayonnement laser étant délivré au moyen d'au moins une fibre optique. Dans le cas d'un laser à disque, le rayonnement laser est généré dans une cavité résonnante dans laquelle se trouve le milieu émetteur qui se présente sous la forme d'un disque, par exemple un disque mince (d'environ 0,1 mm d'épaisseur) en Yb:YAG. Le rayonnement ainsi généré est couplé dans au moins une fibre optique dirigée vers le lieu de traitement. Le laser peut également être à fibre, au sens où le milieu d'amplification est lui-même une fibre optique. Les lasers à fibre ou à disque sont de préférence pompés optiquement à l'aide de diodes laser. Le rayonnement issu des sources laser est de préférence continu.

La longueur d'onde du rayonnement laser, donc la longueur d'onde de traitement, est de préférence comprise dans un domaine allant de 500 à 1300 nm, notamment de 800 à 1200 nm. Une longueur d'onde de 900 à 1100 nm est particulièrement adaptée pour la texturation de feuilles de vitrocéramique colorées au vanadium. Des diodes laser de puissance émettant à une ou plusieurs longueurs d'onde choisie parmi 808 nm, 880 nm, 915 nm, 940 nm ou 980 nm se sont révélées particulièrement bien appropriées. Dans le cas d'un laser à disque, la longueur d'onde de traitement est par exemple de 1030 nm (longueur d'onde d'émission pour un laser Yb :YAG). Pour un laser à fibre, la longueur d'onde de traitement est typiquement de 900 à 1100 nm, par exemple 1070 nm.

Le rayonnement laser a typiquement une puissance P de 10 à 1000 W, de préférence de 50 à 500 W, voire de 70 à 300 W.

Lors de la texturation de la feuille de vitrocéramique, on crée un déplacement relatif entre d'une part l'ensemble formé par la feuille de vitrocéramique disposée sur le support, et d'autre part la ligne laser. L'ensemble feuille de vitrocéramique et support peut ainsi être mis en déplacement, notamment en défilement en translation en regard de la ligne laser fixe, généralement en dessous. Ce mode de réalisation est particulièrement appréciable pour un traitement en continu. Dans un autre mode de réalisation, la ligne laser peut être mise en mouvement, notamment en défilement en translation en regard de l'ensemble feuille de vitrocéramique et support, généralement au-dessus. La ligne peut notamment irradier toute la largeur de la feuille de vitrocéramique en une seule fois. De façon alternative, lorsque la ligne laser n'est pas suffisamment longue, plusieurs passages de la ligne laser peuvent être nécessaires si un traitement de toute la largeur de la feuille de vitrocéramique est souhaité. La ligne laser, et donc éventuellement chaque ligne laser élémentaire, est de préférence disposée perpendiculairement à la direction de défilement relatif.

L'ensemble feuille de vitrocéramique et support peut être mis en mouvement à l'aide de tous moyens mécaniques de convoyage, par exemple à l'aide de bandes, de rouleaux, de plateaux en translation. Le système de convoyage permet de contrôler et réguler la vitesse du déplacement.

Toutes les positions relatives de la feuille de vitrocéramique et du laser sont bien entendu possibles, du moment que la feuille de vitrocéramique peut être convenablement irradiée. La feuille de vitrocéramique sera le plus généralement disposée de manière horizontale, mais elle peut aussi être disposée verticalement, ou selon toute inclinaison possible. Lorsque la feuille de vitrocéramique est disposée horizontalement, le laser est généralement disposé de manière à irradier la face supérieure de celle-ci. Le laser peut également irradier la face inférieure de la feuille de vitrocéramique. Dans ce cas, le support doit être disposé au-dessus de la feuille de vitrocéramique. Il faut également que le système de convoyage de la feuille de vitrocéramique, lorsque ce dernier est en mouvement, laisse passer le rayonnement dans la zone à irradier. C'est le cas par exemple lorsque l'on utilise des rouleaux de convoyage : les rouleaux étant disjoints, il est possible de disposer le laser dans une zone située entre deux rouleaux successifs.

La vitesse de défilement, c'est-à-dire la différence entre les vitesses respectives de la feuille de vitrocéramique et de la ligne laser, est généralement fonction de la puissance du rayonnement laser utilisée et de l'absorption de la feuille de vitrocéramique à la longueur d'onde du rayonnement laser. La vitesse de défilement est d'autant plus élevée que la puissance du laser est élevée et que l'absorption de la feuille de vitrocéramique à la longueur d'onde du rayonnement laser est élevée. La vitesse de défilement v est généralement de 1 à 1000 mm/min, de préférence de 5 à 500 mm/min, voire de 10 à 200 mm/min. Le ratio entre la puissance du rayonnement laser et la vitesse de défilement (P/v) est généralement supérieur à 1,8 W.min/mm, voire 3 W.min/mm, la puissance étant exprimée en W et la vitesse de défilement en mm/min. Il est de préférence inférieur à 150 W.min/mm, voire 100 W.min/mm ou 50 W.min/mm. Alternativement ou cumulativement, la relation entre la puissance du rayonnement laser P et la vitesse de défilement v satisfait de préférence la relation P = a.v + b, dans laquelle a est un paramètre allant de 1,5 à 3,0 W.min/mm, de préférence 2,0 à 2,6 W.min/mm et b est un paramètre allant de 50 à 100 W, de préférence de 60 à 90 W.

De préférence, l'absorption de la feuille de vitrocéramique à la longueur d'onde du rayonnement laser est supérieure ou égale à 20%, de préférence supérieure à 25% ou 30%, et inférieure ou égale à 70%, de préférence inférieure ou égale à 60% ou même 50%. L'absorption est définie comme étant égale à la valeur de 100% à laquelle sont soustraites la transmission et la réflexion de la feuille de vitrocéramique, mesurées pour une épaisseur de 4 mm. L'essentiel de l'énergie apportée par le rayonnement laser est « utilisée » pour chauffer la feuille de de vitrocéramique.

La texturation de la feuille de vitrocéramique provoque l'apparition de saillies secondaires d'une hauteur de 2 à 50 µm, sur la face avant en regard de la ou des zones de surface réfléchissante du support. Les saillies secondaires obtenues sur la face avant de la feuille de vitrocéramique présentent une disposition identique à celle des saillies primaires de la face arrière. La feuille de vitrocéramique peut également présenter, après texturation, une surélévation de la surface de la face avant en regard de la ou des zones de surface réfléchissante du support.

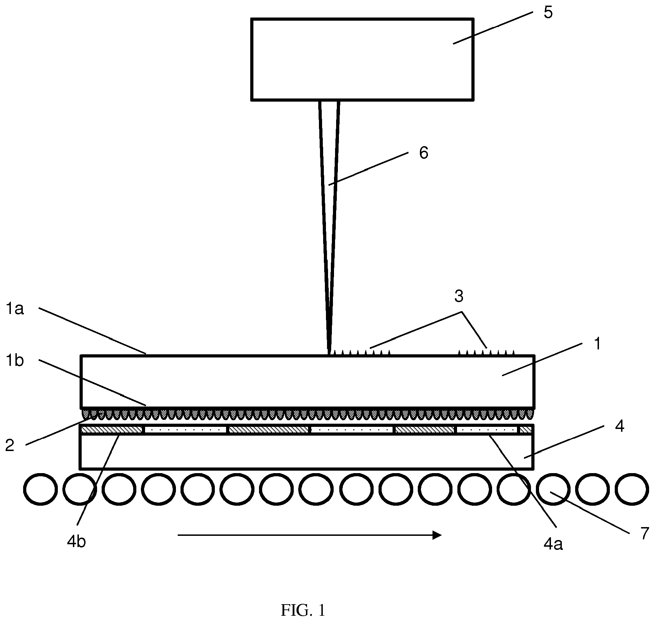

La Fig. 1 illustre un mode de réalisation du procédé selon l'invention. La feuille de vitrocéramique 1 comprenant une face avant 1a lisse et une face arrière 1b texturée est positionnée sur le support 4. La face arrière 1b en contact avec le support 4 comprend des saillies primaires 2 positionnées de façon périodique. Le support 4 comprend des zones de surface réfléchissante 4a et des zones de surface non-réfléchissante 4b, notamment absorbante. L'ensemble feuille de vitrocéramique 1 et support 4 est mis en mouvement à l'aide d'un convoyeur à rouleaux 7. Ce déplacement, représenté par la flèche sur la Fig. 1, fait défiler l'ensemble feuille de vitrocéramique 1 et support 4 en regard d'un rayonnement laser 6, notamment une ligne laser, généré par une source laser 5. Le passage du rayonnement laser 6 en regard des zones de surface réfléchissantes 4a du support 4 provoque l'apparition de saillies secondaires 3 sur la face avant 1a de la feuille de vitrocéramique 1 formant ainsi des zones texturées. Au contraire, il n'y a pas de formation de saillies secondaires 3 lors du passage du laser 6 en regard des zones de surface non-réfléchissantes 4b. Il est ainsi possible de « copier » la texture de la face arrière 1b de la feuille de vitrocéramique 1 sur les zones de la face avant 1a correspondant aux zones de surface réfléchissante 4b du support 4 - c'est-à-dire positionnées au-dessus de celles-ci.

Un autre objet de la présente invention concerne une feuille de vitrocéramique texturée susceptible d'être obtenue par le procédé décrit ci-dessus. Ainsi, la présente invention concerne également une feuille de vitrocéramique monolithique comprenant une face avant et une face arrière, ladite face arrière présentant une surface texturée comprenant des saillies primaires d'une hauteur de 0,01 à 1 mm positionnées de façon périodique, caractérisée en ce que la face avant comprend une zone de surface lisse et une zone de surface texturée comprenant des saillies secondaires d'une hauteur de 2 à 50 µm, et en ce que l'agencement relatif des saillies secondaires les unes par rapport aux autres est identique à l'agencement relatif des saillies primaires les unes par rapport aux autres. En d'autres termes, la position des saillies secondaires les unes par rapport aux autres sur la face avant est sensiblement identique à la position des saillies primaires les unes par rapport aux autres sur la face arrière. Par exemple, dans le cas de saillies primaires formant un réseau périodique, celui-ci est reproduit pour les saillies secondaires sur les zones texturées de la face avant.

Les sommets de deux saillies secondaires adjacentes sont typiquement distants de 0,5 à 5 mm. Les saillies secondaires sont également de préférences positionnées de façon périodique, typiquement sous forme d'un réseau, par exemple selon des lignes parallèles entre elles et en quinconce par rapport aux saillies des lignes adjacentes. Les saillies secondaires ont une hauteur de 2, voire 5 µm, à 50, voire 30 ou 20 µm.

La zone de surface texturée de la face avant peut présenter une surélévation par rapport à la zone de surface lisse. Cette surélévation est typiquement de l'ordre 5 à 100 µm, voire 10 à 70 µm. Dans ce cas, la hauteur des saillies secondaires est mesurée à partir de la surface surélevée.

La zone de surface texturée peut être continue ou discontinue - c'est-à-dire être formée de plusieurs sous-zones texturées. La surface de la zone texturée de la face avant représente au moins 1%, de préférence au moins 5%, voire au moins 10%, de la surface de la feuille de vitrocéramique. Elle représente généralement au plus 50% de la surface de la feuille de vitrocéramique.

Le procédé selon l'invention a pour avantage de permettre une texturation rapide de larges zones. Il ne nécessite par ailleurs l'application d'aucune force extérieure. Il permet, par une simple irradiation laser d'une feuille de vitrocéramique, d'une part de copier la texture de la face arrière sur la face avant, et d'autre part de reporter sur la face avant des motifs réalisés sur le support à l'aide d'un arrangement adéquat de zones réfléchissantes et de zones non-réfléchissante, notamment absorbantes, sur le support. Les motifs peuvent être à but esthétiques ou fonctionnels. Les saillies secondaires ont en effet une taille suffisante pour être discernables à l' oeil nu et/ou au toucher.

La feuille de vitrocéramique selon l'invention peut être utilisée pour différentes applications telles que des plans de travail, dans des dispositifs de cuisson, par exemple des plaques de cuisson, notamment à induction, ou comme élément décoratif. Ainsi, la présente invention concerne également un dispositif de cuisson comprenant une feuille de vitrocéramique telle que décrite ci-dessus ou obtenue par le procédé décrit ci-dessus.

Lorsque la feuille de vitrocéramique est utilisée dans un dispositif de cuisson tel qu'une plaque de cuisson, il est ainsi possible de délimiter certaines zones, par exemples l'encadrement de zones de chauffe ou de boutons de commande, qui pourront être aisément distinguées, notamment par des personnes malvoyantes. Pour des plaques de cuisson à induction, la présence de saillies au niveau des zones de chauffe permet également de limiter la surface de contact entre le récipient à chauffer et la plaque de vitrocéramique. La présence d'une lame d'air isolante entre la feuille de vitrocéramique et le récipient à chauffer limite les pertes thermiques par conduction et par conséquent la chauffe de la feuille de vitrocéramique, induisant un refroidissement plus rapide de celle-ci après utilisation.

L'invention est illustrée à l'aide des exemples de réalisation non limitatifs qui suivent.

### EXEMPLES

Une feuille de vitrocéramique Kerablack+, commercialisée par la Société Eurokera, de 4 mm d'épaisseur, colorée au vanadium et présentant une face avant lisse et une face arrière texturée sous forme d'un réseau périodique de picots de hauteur environ 80 µm (saillies primaires) a été soumise à un traitement de texturation selon l'invention. Le laser utilisé est un laser continu de longueur d'onde 980 nm focalisé sous forme d'une ligne laser de 1 cm de long. La puissance du laser est fixée à 114 W et la vitesse de défilement relatif entre la ligne laser et la feuille de vitrocéramique est fixée à 20 mm/min.

Un premier échantillon (I1) de feuille de vitrocéramique est disposé face arrière texturée en contact avec un support miroir en inox réfléchissant le faisceau laser. Dans ce cas, la face avant lisse est irradiée par le faisceau laser incident. Celui-ci traverse une première fois la feuille de vitrocéramique et est réfléchi par le support miroir avant de traverser une seconde fois la feuille de vitrocéramique en sens inverse (depuis la face texturée vers la face lisse). On observe sur la zone traitée une surépaisseur pouvant aller jusqu'à 40 µm par rapport à la face lisse non traitée de la feuille de vitrocéramique. On observe également sur la zone traitée la présence de picots de hauteur de 5 à 10 µm (saillies secondaires) sur la face avant.

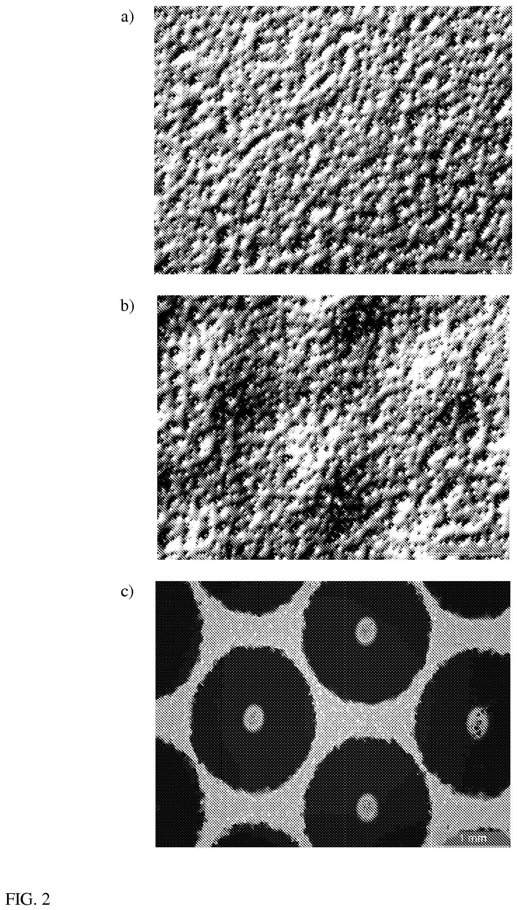

Différentes observations, notamment au microscope, ont permis de vérifier que le relief des picots obtenus sur la face avait un arrangement identique au relief des picots de la face arrière. En particulier, la distance entre les sommets de deux picots adjacents, les angles formés par trois picots adjacents et la périodicité des picots sont identiques pour les picots de la face arrière et ceux de la face avant. La Fig. 2 montre les observations au microscope de la face avant lisse avant texturation (a) et après texturation (b) en comparaison avec la face arrière texturée (c).

Un deuxième échantillon (I2) de feuille de vitrocéramique est disposé face avant lisse en contact avec un support miroir en inox réfléchissant le faisceau laser. A l'inverse de l'échantillon I1, la face arrière texturée de l'échantillon I2 est irradiée par le faisceau laser incident. Celui-ci traverse une première fois la feuille de vitrocéramique et est réfléchi par le support miroir avant de traverser une seconde fois la feuille de vitrocéramique en sens inverse (depuis la face lisse vers la face texturée). On observe également une surépaisseur et la présence de picots sur la face avant de la zone traitée. Dans ce cas cependant, la surépaisseur est limitée à quelques micromètres alors que les picots sur la face avant présentent une hauteur jusqu'à 15 µm. Ainsi, dans le cas d'une irradiation de la face texturée, contrairement à une irradiation de la face lisse, la surépaisseur n'est quasiment pas sensible au toucher alors que les picots de la face avant (saillies secondaires) sont aisément détectés au toucher.

Un troisième échantillon (I3) de feuille de vitrocéramique est disposé face avant lisse en contact avec un support comprenant une zone miroir en inox réfléchissant le faisceau laser et une zone noire non-réfléchissante absorbant le faisceau laser (miroir inox oxydé au laser). La face arrière texturée est irradiée par le faisceau laser incident. Au niveau de la zone de surface réfléchissante du support, le faisceau laser traverse une première fois la feuille de vitrocéramique et est réfléchi avant de traverser celle-ci une seconde fois. Au niveau de la zone de surface non-réfléchissante (en l'occurrence absorbante), le faisceau laser ne traverse qu'une seule fois la feuille de vitrocéramique avant d'être absorbé par le support. Sur la face avant de la zone traitée en regard de la zone réfléchissante, on observe, de façon identique à l'échantillon I2, une légère surélévation et des picots ayant un arrangement identique à ceux de la face arrière. Au contraire, sur la face avant en regard de la zone non-réfléchissante, on observe une diminution de la surépaisseur qui est quasiment indétectable à l'oeil nu ou au toucher, et une absence totale de picots. Une irradiation de la face avant lisse (face arrière texturée en contact avec le support) conduit à des observations similaires.

## Revendications

1. Feuille de vitrocéramique monolithique comprenant une face avant et une face arrière, ladite face arrière présentant une surface texturée comprenant des saillies primaires d'une hauteur de 0,01 à 1 mm positionnées de façon périodique, **caractérisée en ce que** la face avant comprend une zone de surface lisse et une zone de surface texturée comprenant des saillies secondaires d'une hauteur de 2 à 50 µm, et **en ce que** l'agencement relatif des saillies secondaires les unes par rapport aux autres est identique à l'agencement relatif des saillies primaires les unes par rapport aux autres.

2. Feuille de vitrocéramique selon la revendication 1, **caractérisée en ce que** la zone de surface texturée de la face avant présente une surélévation par rapport à la zone de surface lisse.

3. Feuille de vitrocéramique selon l'une des revendications 1 ou 2, **caractérisée en ce que** les saillies sont alignées de façon périodique selon des lignes parallèles entre elles, et positionnées en quinconce par rapport aux saillies des lignes par rapport aux saillies des lignes adjacentes.

4. Feuille de vitrocéramique selon l'une des revendications 1 à 3, **caractérisée en ce que** les sommets de deux saillies adjacentes sont distants de 0,5 à 5 mm.

5. Feuille de vitrocéramique selon l'une des revendications 1 à 4, **caractérisée en ce que** la zone de surface texturée représente au moins 1 % de la surface de la face avant.

6. Procédé de texturisation d'une feuille de vitrocéramique monolithique telle que définie à l'une des revendications 1 à 5 comprenant :
- la fourniture d'une feuille de vitrocéramique monolithique comprenant une face avant lisse et une face arrière présentant une surface texturée comprenant des saillies primaires d'une hauteur de 0,01 à 1 mm positionnées de façon périodique ;
- le positionnement de la feuille de vitrocéramique sur un support, ledit support étant réfléchissant sur au moins une partie de sa surface ; et
- la texturation d'une zone de la face avant de la feuille de vitrocéramique à l'aide d'un rayonnement laser.

7. Procédé selon la revendication 6, **caractérisé en ce que** la feuille de vitrocéramique positionnée sur le support défile en regard du rayonnement laser.

8. Procédé selon l'une des revendications 6 ou 7, **caractérisé en ce que** le rayonnement laser est une ligne laser.

9. Procédé selon l'une des revendications 6 à 8, **caractérisé en ce que** le support présente une première zone de surface réfléchissant le rayonnement laser et une deuxième zone de surface non-réfléchissante.

10. Procédé selon l'une des revendications 6 à 9, **caractérisé en ce qu'**un masque est disposé au-dessus de la feuille de vitrocéramique.

11. Procédé selon l'une des revendications 6 à 10, **caractérisé en ce que** le ratio entre la puissance du laser, exprimée en W, et la vitesse de défilement, exprimée en mm/min, est supérieur à 1,8.

12. Dispositif de cuisson comprenant une feuille de vitrocéramique selon l'une des revendications 1 à 5 ou une feuille de vitrocéramique obtenue par le procédé selon l'une des revendications 3 à 11.

## Patentansprüche

1. Monolithische Glaskeramikplatte, umfassend eine Vorderseite und eine Rückseite, wobei die Rückseite eine strukturierte Oberfläche aufweist, umfassend periodisch positionierte primäre Vorsprünge mit einer Höhe von 0,01 bis 1 mm, **dadurch gekennzeichnet, dass** die Vorderseite einen glatten Oberflächenbereich und einen strukturierten, sekundäre Vorsprünge mit einer Höhe von 2 bis 50 µm umfassenden Oberflächenbereich umfasst, und dass die relative Anordnung der sekundären Vorsprünge zueinander identisch mit der relativen Anordnung der primären Vorsprünge zueinander ist.

2. Glaskeramikplatte nach Anspruch 1, **dadurch gekennzeichnet, dass** der strukturierte Oberflächenbereich der Vorderseite gegenüber dem glatten Oberflächenbereich eine Erhöhung aufweist.

3. Glaskeramikplatte nach einem der Ansprüche 1 oder 2,
**dadurch gekennzeichnet, dass** die Vorsprünge entlang zueinander paralleler Linien periodisch ausgerichtet sind und bezüglich der Vorsprünge der Linien bezüglich der Vorsprünge der benachbarten Linien gestaffelt positioniert sind.

4. Glaskeramikplatte nach einem der Ansprüche 1 bis 3,
**dadurch gekennzeichnet, dass** die Scheitel zweier benachbarter Vorsprünge 0,5 bis 5 mm entfernt sind.

5. Glaskeramikplatte nach einem der Ansprüche 1 bis 4,
**dadurch gekennzeichnet, dass** der strukturierte Oberflächenbereich mindestens 1 % der Oberfläche der Vorderseite ausmacht.

6. Verfahren zum Strukturieren einer monolithischen Glaskeramikplatte, wie sie in einem der Ansprüche 1 bis 5 definiert ist, umfassend:
- Bereitstellen einer monolithischen Glaskeramikplatte, umfassend eine glatte Vorderseite und eine Rückseite, die eine strukturierte Oberfläche aufweist, umfassend periodisch positionierte primäre Vorsprünge mit einer Höhe von 0,01 bis 1 mm;
- Positionieren der Glaskeramikplatte auf einem Träger, wobei der Träger auf mindestens einem Teil seiner Oberfläche reflektierend ist; und
- Strukturieren eines Bereichs der Vorderseite der Glaskeramikplatte unter Verwendung von Laserstrahlung.

7. Verfahren nach Anspruch 6, **dadurch gekennzeichnet, dass** die auf dem Träger positionierte Glaskeramikplatte an der Laserstrahlung vorbeiläuft.

8. Verfahren nach einem der Ansprüche 6 oder 7,
**dadurch gekennzeichnet, dass** die Laserstrahlung eine Laserlinie ist.

9. Verfahren nach einem der Ansprüche 6 bis 8,
**dadurch gekennzeichnet, dass** der Träger einen ersten, die Laserstrahlung reflektierenden Oberflächenbereich und einen zweiten, nicht reflektierenden Oberflächenbereich aufweist.

10. Verfahren nach einem der Ansprüche 6 bis 9,
**dadurch gekennzeichnet, dass** über der Glaskeramikplatte eine Maske eingerichtet ist.

11. Verfahren nach einem der Ansprüche 6 bis 10,
**dadurch gekennzeichnet, dass** das Verhältnis der in W ausgedrückten Laserleistung zu der in mm/min ausgedrückten Vorbeilaufgeschwindigkeit größer als 1,8 ist.

12. Kochvorrichtung mit einer Glaskeramikplatte nach einem der Ansprüche 1 bis 5 oder einer durch das Verfahren nach einem der Ansprüche 3 bis 11 erhaltenen Glaskeramikplatte.

## Claims

1. A monolithic glass-ceramic sheet comprising a front face and a rear face, said rear face having a textured surface comprising primary protrusions having a height of from 0.01 to 1 mm positioned periodically, **characterized in that** the front face comprises a smooth surface zone and a textured surface zone comprising secondary protrusions having a height of from 2 to 50 µm, and **in that** the relative arrangement of the secondary protrusions with respect to one another is identical to the relative arrangement of the primary protrusions relative to one another.

2. The glass-ceramic sheet as claimed in claim 1, **characterized in that** the textured surface zone of the front face has increased height relative to the smooth surface zone.

3. The glass-ceramic sheet as claimed in one of claims 1 or 2, **characterized in that** the protrusions are aligned periodically along mutually parallel lines, and positioned in staggered rows relative to the protrusions of the lines relative to the protrusions of the adjacent lines.

4. The glass-ceramic sheet as claimed in one of claims 1 to 3, **characterized in that** the peaks of two adjacent protrusions are a distance of 0.5 to 5 mm apart.

5. The glass-ceramic sheet as claimed in one of claims 1 to 4, **characterized in that** the textured surface zone represents at least 1% of the surface of the front face.

6. A process for texturing a monolithic glass-ceramic sheet as defined in one of claims 1 to 5, comprising:
- providing a monolithic glass-ceramic sheet comprising a smooth front face and a rear face that has a textured surface comprising primary protrusions having a height of from 0.01 to 1 mm positioned periodically;
- positioning the glass-ceramic sheet on a support, said support being reflective on at least one portion of its surface; and
- texturing a zone of the front face of the glass-ceramic sheet using laser radiation.

7. The process as claimed in claim 6, **characterized in that** the glass-ceramic sheet positioned on the support runs facing the laser radiation.

8. The process as claimed in either of claims 6 or 7, **characterized in that** the laser radiation is a laser line.

9. The process as claimed in one of claims 6 to 8, **characterized in that** the support has a first surface zone that reflects the laser radiation and a non-reflective second surface zone.

10. The process as claimed in one of claims 6 to 9, **characterized in that** a mask is positioned on top of the glass-ceramic sheet.

11. The process as claimed in one of claims 6 to 10, **characterized in that** the ratio between the power of the laser, expressed in W, and the speed of travel, expressed in mm/min, is greater than 1.8.

12. A cooking device comprising a glass-ceramic sheet as claimed in one of claims 1 to 5 or a glass-ceramic sheet obtained by the process as claimed in one of claims 6 to 11.
